Europäisches Patentamt

(19) European Patent Office

Office européen des brevets

(11) Veröffentlichungsnummer: **0 013 691**
**B1**

(12) # EUROPÄISCHE PATENTSCHRIFT

(45) Veröffentlichungstag der Patentschrift:
23.01.85

(51) Int. Cl.⁴: **B 65 D 47/34, B 05 B 11/00**

(21) Anmeldenummer: **79103911.8**

(22) Anmeldetag: **11.10.79**

(54) **Spender für pastöse Produkte.**

(30) Priorität: **17.01.79 DE 2901717**

(43) Veröffentlichungstag der Anmeldung:
**06.08.80 Patentblatt 80/16**

(45) Bekanntmachung des Hinweises auf die Patenterteilung:
**23.01.85 Patentblatt 85/4**

(84) Benannte Vertragsstaaten:
**AT BE CH FR GB IT LU NL SE**

(56) Entgegenhaltungen:
**FR - A - 332 186**
**FR - A - 581 565**
**FR - A - 1 177 620**
**FR - A - 1 415 269**
**FR - A - 2 344 469**
**US - A - 2 128 567**
**US - A - 3 029 742**
**US - A - 3 162 334**
**US - A - 3 820 689**

(73) Patentinhaber: **Czech, Joachim, Prüllstrasse 25,
D-8405 Donaustauf Regensburg (DE)**

(72) Erfinder: **Czech, Joachim, Jahnstrasse 19,
D-8405 Donaustauf (DE)**
Erfinder: **Sieghart, Hans Diether, Forststrasse 30,
D-8052 Moosburg (DE)**

(74) Vertreter: **Patentanwälte Dipl.-Ing. A. Grünecker,
Dr.-Ing. H. Kinkeldey, Dr.-Ing. W. Stockmair,, Dr. rer. nat.
K. Schumann, Dipl.-Ing. P.H. Jakob, Dr. rer. nat. G.
Bezold Maximilianstrasse 58, D-8000 München 22 (DE)**

## Beschreibung

Die Erfindung bezieht sich auf einen Spender für pastöse Produkte mit einem das jeweilige Produkt enthaltenden Behälter, der an einem Ende mit einem dichtend an der Behälterinnenwand gleitenden Kolben verschlossen und am anderen Ende von einer mindestens eine Öffnung aufweisenden Trennwand abgeschlossen und mit einem die Trennwand überdeckenden, einen Applikator mit einem zur Öffnung der Trennwand seitlich versetzt verlaufenden Ausgabekanal aufweisenden Kopfstück versehen ist, das zusammen mit der Trennwand eine durch äußere Beaufschlagung volumenveränderliche Pumpenkammer bildet, die gegenüber dem Behälter durch ein nur in Richtung der Pumpenkammer zu öffnendes erstes Rückschlagventil und gegenüber der Mündung des Applikators durch ein nur in Richtung dieser Mündung zu öffnendes zweites Rückschlagventil abgetrennt ist.

Bei einem solchen, aus der US-A-3 361 305 bekannten Spender ist die Pumpenkammer durch eine sich kegelförmig konkav in das Innere des Behälters hinein erstreckende, vom Behälter abtrennbare gesonderte Trennwand und eine sich kegelförmig nach oben wölbende Membran begrenzt, wobei an einer Stelle zwischen Trennwand und Membran ein Auslaßkanal in die Pumpenkammer mündet, der als zweites Rückschlagventil eine Kugel mit zugeordnetem Ventilsitz aufweist. In der Trennwand sind mehrere Öffnungen vorgesehen, die jeweils durch auf der Trennwand liegende elastische Klappen abgedeckt sind, so daß diese Öffnungen zusammen mit den ihnen zugeordneten Klappen das erste Rückschlagventil bilden. Bei diesem bekannten Spender hat die Pumpenkammer zwar einen kreisförmigen Querschnitt (im Schnitt quer zur Hauptachse), doch ist die Höhe der Pumpenkammer an ihrem Außenumfang Null, in unbetätigtem Zustand der äußeren verformbaren Betätigungswand nimmt die Höhe der Pumpenkammer radial von außen nach innen linear zu. In betätigtem Zustand der Außenwand, bei dem diese deformiert ist, ist die Form der Pumpenkammer überhaupt nicht generell vorhersehbar. Beim Füllen des Behälters mit dem Produkt wird dieses nach dem Einsetzen des dichtend an der Behälterinnenwand gleitenden Kolbens über die Öffnungen des ersten Rückschlagventils in die Pumpenkammer eingeleitet, so daß diese in ihrem expandierten Zustand im wesentlichen vollständig mit dem jeweiligen Produkt gefüllt ist. Wird zum Ausgeben des Produkts von außen auf die Membran z. B. mit Hilfe des Daumens ein Druck ausgeübt, so wird das Volumen der Pumpenkammer verringert, wodurch das sich zuvor in der Pumpenkammer befindliche Produkt über das sich dann öffnende zweite Rückschlagventil und den Auslaßkanal nach außen abgegeben wird. Bei dieser Volumenverringerung der Pumpenkammer kann das Produkt nicht zurück in den Behälter entweichen, da die elastischen Klappen fest auf die Öffnungen der Trennwand gedrückt werden, das erste Rückschlagventil also geschlossen ist. Wird nach dem Verdrängen des Produktes aus der Pumpenkammer durch Loslassen der Membran das Volumen der Pumpenkammer wiederum vergrößert, so schließt infolge der auftretenden Saugwirkung das zweite Rückschlagventil, wodurch keine Außenluft durch den Auslaßkanal hindurch in die Pumpenkammer gelangen kann. Durch den in der Pumpenkammer aufgrund der Volumenvergrößerung entstehenden Unterdruck öffnet aber das erste Rückschlagventil, indem die elastischen Klappen von den Öffnungen in der Trennwand abgehoben werden, so daß aus dem Behälter Produkt in die Pumpenkammer nachströmen kann, wodurch diese wiederum mit dem auszugebenden Produkt gefüllt wird. Dieser bekannte Spender arbeitet jedoch hinsichtlich der jeweils abzugebenden Produktmenge nur ungenau, da die Membran allein aufgrund ihrer Eigenelastizität zurückgestellt wird, Ermüdungserscheinungen unterliegt und auch nur ein begrenztes maximales Volumen der Pumpenkammer zuläßt.

Aus der FR-A-2 344 469 ist ein Behälter bekannt, der sich von dem Spender der eingangs erläuterten Art in seinem Aufbau grundsätzlich unterscheidet, da er keine separate Pumpenkammer aufweist, sondern einen auch als Pumpkammer benutzten Behälterraum, der an seinem unteren Ende einen außen vom Atmosphärendruck belasteten, an der röhrenförmigen Behälterinnenwand dichtend gleitenden kolbenartigen Boden aufweist, an dem Spreizfinger angebracht sind, die bei einem Verringern des Behältervolumens ein Nachuntenbewegen des Bodens verhindern sollen. Das Innere des Behälters ist von dem Ausgabekanal durch ein aus Ventilsitz und Ventilverschließteil bestehendes Ventil getrennt, wobei das Ventil als Ganzes als in dem Ausgabekanal angeordneter Einsatz ausgebildet ist.

In den französischen Patentschriften Nr. 1 177 620, 1 415 269 und 581 565 ist jeweils ein Spender für Flüssigkeiten offenbart, der eine Pumpenkammer von im wesentlichen zylindrischer Form und ein Kopfstück aufweist, das ein von außen gegen die Wirkung einer Rückstellfeder betätigbares Pumpelement aufweist. In den Spendern gemäß FR-A-1 177 620 und FR-A-1 415 269 ist die Pumpenkammer jedoch mit einem Ausgabekanal des Applikators durch einen Kanal verbunden, der sich koaxial zur Mittelachse des Behälters des jeweiligen Spenders erstreckt und mit einem Ausgabekanal des Applikators verbunden ist, der sich quer zur Bewegungsachse des Pumpelements zur Mündung des Applikators erstreckt. Dieser quer verlaufende Kanal wird bei einer Betätigung des Pumpelements mit diesem auf- und abbewegt. Bei einem Spendevorgang bewegt sich somit die Mündung des Applikators auf und ab und ist entweder quer zur Hauptachse des Spenders ausgerichtet oder zum Behälter hin gerichtet (im Falle der FR-A-1 177 620), so daß ein präzises Ausrichten der Mündung des Applikators auf die Stelle, an die der Inhalt des Behälters gespendet werden soll, unmöglich ist. Eine Querausrichtung des Applikatorkanals und der Mündung ist auch bei der Vorrichtung gemäß der FR-A-581 565 mit den gleichen Nachteilen gegeben. Keine dieser Vorrichtungen weist einen Einsatz auf, an welchem zumindest eines der Verschließteile der beiden Rückschlagventile angebracht wäre. Die Verschließteile sind als Kegel (FR-A-1 415 269) oder Abdeckplatten (FR-A-1 177 620) oder Kugeln ausgebildet, die frei aufwärts oder abwärts beweglich sind und an keinem anderen Teil angebracht, insbesondere angelenkt, sind. Eine derartige Ausbildung der jeweiligen Rückschlagventile ist zum Einsatz in einem Spender für pastöse Produkte von vornherein nicht geeignet, weil die Verschließteile sehr schnell unkontrollierbar in einer Zwischenstellung zwischen der offenen und der geschlossenen Stellung schweben würden.

Der Erfindung liegt die Aufgabe zugrunde, einen Spender der eingangs genannten Art so weiterzubilden, daß bei einfachem Aufbau eine feinfühlige Dosierung der abgegebenen Menge möglich ist und eine wirtschaftliche Herstellung und eine einfache Montage gewährleistet sind.

Bei einem Spender der eingangs genannten Art ist diese Aufgabe gemäß der Erfindung dadurch gelöst, daß die Pumpenkammer im wesentlichen zylindrisch ausgebildet ist, daß das Kopfstück ein von außen betätigbares, relativ zur Trennwand als Ganzes verschiebbares Pumpelement zur Volumenänderung der Pumpenkammer aufweist, an dem eine die Rückstellbewegung von der Trennwand weg bewirkende Rückstellfeder angreift, und daß im Kopfstück ein Spritzgußteil angeordnet ist, an dem das Verschließteil mindestens eines der beiden Rückschlagventile angebracht ist, wobei der Ventilsitz des ersten Rückschlagventils in der mit dem Behälter einstückigen Trennwand und der Ventilsitz des zweiten Rückschlagventils im kanalförmigen Teil des Kopfstücks angeordnet ist.

Durch die im wesentlichen zylindrische Ausbildung der Pumpenkammer, deren Volumen durch Relativbewegung einer Kolbenfläche gegenüber der Innenwand der zylindrischen Pumpenkammer verändert wird, läßt sich auch bei einem relativ großen Volumen der Pumpenkammer dieses reproduzierbar durch den jeweiligen Hub der Kolbenfläche verändern bzw. steuern. Durch eine getrennt vorgesehene Rückstellfeder zum Bewirken der Relativbewegung zwischen der Kolbenfläche und der zylindrischen Pumpenkammer in Richtung einer Volumenvergrößerung wird eine sichere Rückstellung des Spenders in seinen Ruhezustand auch noch nach einer Vielzahl von Betätigungen sichergestellt. Der erfindungsgemäße Spender ist aus wenigen einfachen Teilen aufgebaut und somit wirtschaftlich herstellbar und im Gebrauch zuverlässig.

Eine günstige Ausgestaltung des erfindungsgemäßen Spenders wird auch dadurch erreicht, daß das Verschließteil des ersten Rückschlagventils einstückig mit dem Spritzgußteil ist.

Ein besonders einfacher Aufbau des erfindungsgemäßen Spenders wird dadurch erzielt, daß sowohl das Verschließteil des ersten Rückschlagventils als auch das Verschließteil des zweiten Rückschlagventils an dem Spritzgußteil angebracht ist. Für Herstellung und Montage ist es dabei besonders günstig, wenn die Verschließteile beider Rückschlagventile einstückig mit dem Spritzgußteil sind.

Eine günstige Ausführungsform des erfindungsgemäßen Spenders ist dadurch gegeben, daß das Kopfstück als eine in Längsrichtung des Behälters relativ zur Trennwand des Behälters verschiebbare, einen Teil der Mantelfläche des Behälters umfassende, das Pumpelement bildende Kappe ausgebildet ist. Bei dieser Ausführungsform wird bei einem Aufschieben der Kappe auf den Behälter das Volumen der Pumpkammer verkleinert.

Mit Vorteil ist diese Ausführungsform so ausgebildet, daß das Spritzgußteil als elastische zylindrische Manschette ausgebildet ist, die parallel zur Innenmantelfläche der Kappe angeordnet und als Rückstellfeder wirkend mit einem Ende an dem Kopfstück und mit dem anderen Ende an der Trennwand bzw. dem Behälter anliegt.

Eine alternative vorteilhafte Ausführungsform des erfindungsgemäßen Spenders ist dadurch gegeben, daß das Pumpelement als ein in die Pumpenkammer absenkbarer, im Kopfstück dichtend geführter Kolben ausgebildet ist, und der Applikator als relativ zur Trennwand des Behälters unbeweglicher Ausgabekanal ausgebildet ist. Bei dieser Ausführungsform der Erfindung ist die zylindrische Pumpenkammer als stationär zu betrachten, in der ein von Hand zu verschiebender Kolben abzusenken ist, um das Volumen der Pumpenkammer zu verringern.

Weitere Ausgestaltungen der Erfindung sind in den übrigen Ansprüchen angegeben.

Die Erfindung wird anhand in der Zeichnung dargestellter Ausführungsbeispiele näher erläutert. Im einzelnen zeigt

Fig. 1 einen Längsschnitt eines ersten Ausführungsbeispiels der Erfindung im Ruhezustand,

Fig. 2 das in Fig. 1 gezeigte Ausführungsbeispiel in der linken Schnitthälfte bei einer Volumenverringerung und in der rechten Schnitthälfte bei einer Volumenvergrößerung der Pumpenkammer,

Fig. 3 einen Längsschnitt durch ein zweites Ausführungsbeispiel der Erfindung,

Fig. 4 einen Längsschnitt durch das Kopfstück längs der Linie IV, V-IV, V in Fig. 3,

Fig. 5 den gleichen Schnitt bei einer maximalen Volumenverringerung der Pumpenkammer,

Fig. 6 eine vergrößerte Darstellung eines die Rückschlagventile bildenden Spritzgußteils im Schnitt,

Fig. 7 eine vergrößerte Darstellung des Spritzgußteils der Fig. 6 in der Draufsicht und

Fig. 8 einen Schnitt längs der Linie VIII-VIII in Fig. 3.

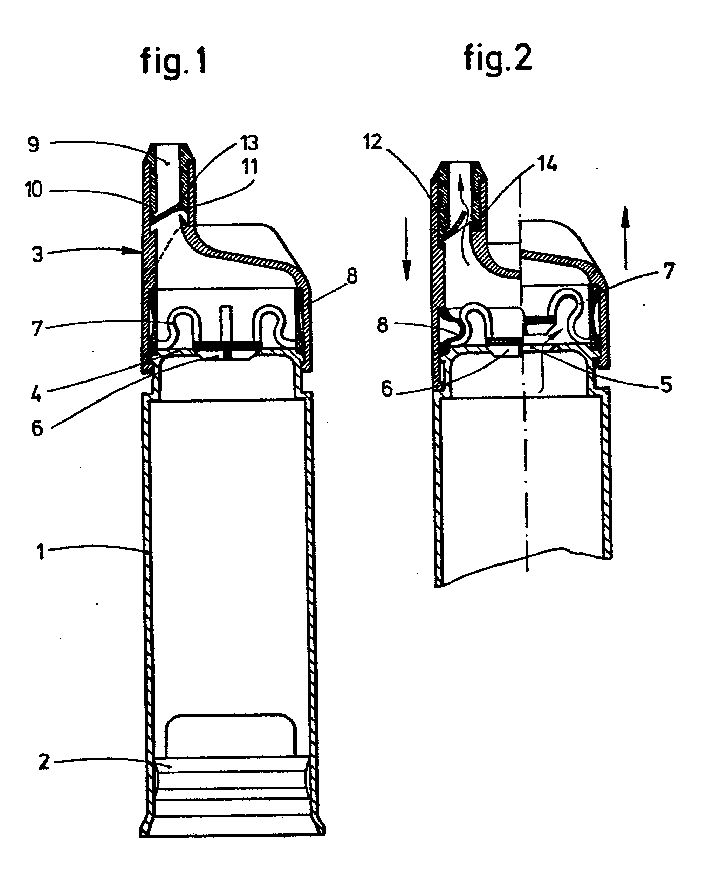

Bei dem in den Fig. 1 und 2 dargestellten ersten Ausführungsbeispiel umfaßt der Spender einen im wesentlichen zylindrischen Behälter 1 aus einem Kunststoff, z. B. Polypropylen, in den das auszugebende Produkt eingefüllt wird. Der Behälter 1 weist einen sein unteres Ende verschließenden Kolben 2 auf, der dichtend an der Innenmantelfläche des Behälters 1 gleitet, um bei einer Entnahme des Produktes aus dem Behälter das Volumen fortlaufend zu verringern, so daß sich bei einer gleichbleibenden äußeren Form des Behälters kein Unterdruck in dem Behälter ausbilden oder aber in diesem sich keine Luft sammeln kann. An seinem oberen Ende weist der Behälter 1 ein Kopfstück 3 auf, das als eine im wesentlichen zylindrische Hülse ausgebildet ist, die auf der Außenmantelfläche des Behälters 1 gleitend geführt ist. Bei dem gezeigten Ausführungsbeispiel ist zu diesem Zweck im oberen Teil des Behälters 1 seine Außenmantelfläche etwas nach innen zurückversetzt, so daß die Außenmantelfläche des Kopfstücks 3 mit der Außenmantelfläche des übrigen und Hauptteils des Behälters 1 im wesentlichen fluchtet.

Die Trennwand 4 zwischen dem Behälter und dem Kopfstück dient in Verbindung mit der in Längsrichtung des Behälters 1 verschiebbaren Hülse als Kolbenfläche, so daß das Volumen einer durch diese Kolbenfläche und den Innenraum der Hülse begrenzten Pumpenkammer bei der Relativbewegung zwischen Hülse und Trennwand 4 verändert wird. In der Trennwand 4 ist eine Öffnung 5 vorgesehen, an der ein Ventilsitz ausgebildet ist, der mit einem Ventildeckel 6 zusammenwirkt, der seinerseits über elastische Bänder 7 gelagert ist. Innerhalb der Hülse und im wesentlichen an ihrer Mantelfläche parallel anliegend ist eine als Rückstellfeder wirkende elastische Manschette 8 vorgesehen, deren eines Ende an der Trennwand 4 und deren anderes Ende an der Hülse festgelegt ist. Die Hülse des Kopfstückes 3 mündet nach oben in einen Applikator 9 bzw. ein diesen aufnehmendes Hülsenteil 10. .

Bei dem hier gezeigten Ausführungsbeispiel ist am unteren Ende des Applikators 9 eine seinen Durchlaßkanal schließende elastische Klappe 11 vorgesehen, die einen ersten Randbereich 12 mit der Innenwand des Durchlaßkanals bildet, der zur Bildung eines Scharniers zwischen der Klappe und der Applikatorinnenwand elastisch, jedoch relativ stabil ausgebildet ist. Ein diesem ersten Randbereich 12 im wesentlichen gegenüberliegender zweiter Randbereich 13 ist dagegen relativ dünn, den Durchlaßkanal des Applikators jedoch noch vollständig verschließend, ausgebildet.

Beim vollständigen Einführen des Applikators 9 in den Hülsenteil 10 des Kopfstückes 3 durchtrennt ein an der Innenmantelfläche des Hülsenteils 10 vorgesehener schneidenartiger Vorsprung 14 den relativ dünnen zweiten Randbereich der elastischen Klappe, so daß diese dann über ihren als Scharnier wirkenden ersten Randbereich in dem Durchlaßkanal des Applikators 9 beweglich ist. Diese elastische Klappe 11 bildet dann ein zweites Rückschlagventil, während ein erstes Rückschlagventil durch den Ventildeckel 6 und die Öffnung 5 in der Trennwand 4 gebildet ist.

Wie sich insbesondere aus Fig. 2 der Zeichnung ergibt, wird bei einem im linken Teilschnitt dargestellten Herabschieben des Kopfteils 3 das Volumen der Pumpenkammer verringert, wodurch das sich in der Pumpenkammer befindliche Produkt durch den Durchlaßkanal des Applikators 9 hindurch nach außen abgegeben wird, wobei dann unter dem sich aufbauenden Druck das zweite Rückschlagventil geöffnet wird, indem die Klappe 11 um den als Scharnier wirkenden ersten Randbereich herum geschwenkt wird. Aufgrund des ansteigenden Druckes bei der Verringerung des Volumens der Pumpenkammer wird der Ventildeckel 6 auf den an der Öffnung 5 ausgebildeten Ventilsitz gedrückt, so daß keine Verbindung zwischen dem Inneren des Behälters 1 und der Pumpenkammer besteht. Wie aus Fig. 2 deutlich zu erkennen ist, wird bei dieser Bewegung des Kopfstückes 3 zum Vermindern des Volumens der Pumpenkammer die als Rückstellfeder wirkende elastische Manschette 8 so verformt, daß sie sich nach innen in die Pumpenkammer hinein ausbeult.

Wird anschließend das Kopfstück 3 nicht länger in Richtung einer Bewegung nach unten beaufschlagt, so gleitet dieses unter der Kraft der Rückstellfeder wieder nach oben, wodurch dann das Volumen der Pumpenkammer wieder vergrößert wird. Infolge dieser Vergrößerung des Volumens der Pumpenkammer entsteht in ihr ein Unterdruck, der zu einem sofortigen Schließen der Klappe 11 führt, was durch den sich im Durchlaßkanal des Applikators 9 noch befindlichen Teil des auszugebenden Produktes unterstützt wird, das bei einer Vergrößerung des Volumens der Pumpenkammer teilweise wieder zurückgesaugt wird. Infolge des Unterdrucks in der Pumpenkammer wird aber auch der Ventildeckel 6 von der Öffnung 5 der Trennwand 4 abgehoben, so daß das Produkt aus dem Inneren des Behälters 1 in die Pumpenkammer hineinströmen kann, um diese erneut mit Produkt zu füllen, wonach nach erfolgtem Druckausgleich zwischen dem Inneren der Pumpenkammer und dem Inneren des Behälters 1 der Ventildeckel 6 sich wieder auf die Öffnung 5 absenkt.

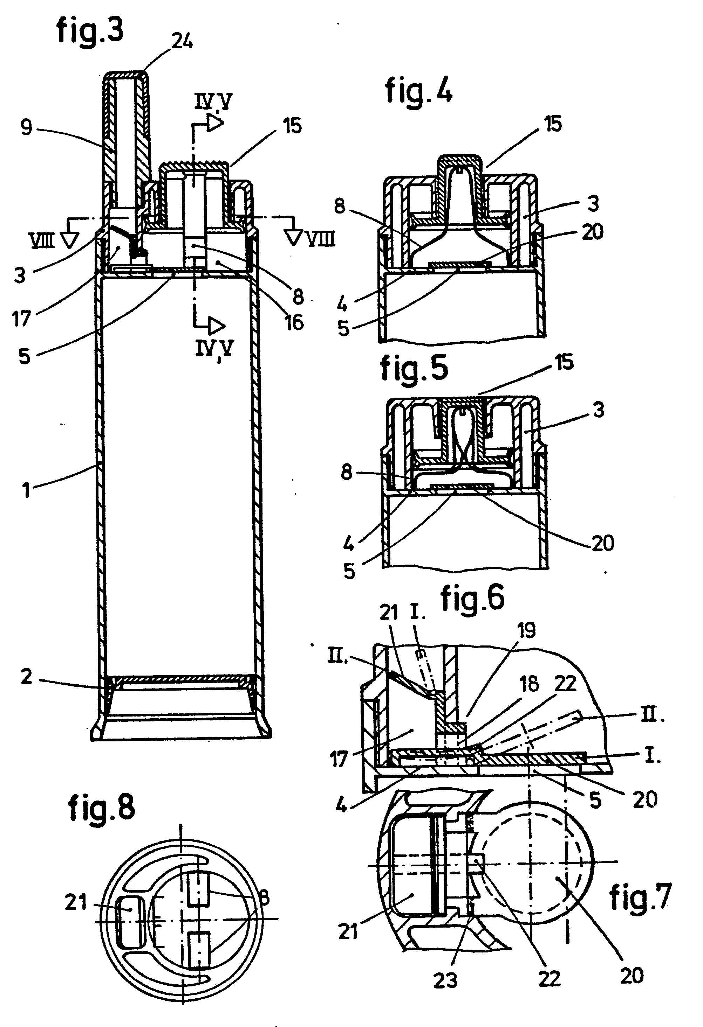

In den Fig. 3 bis 8 ist ein zweites Ausführungsbeispiel der Erfindung dargestellt, wobei Teile, die denen des ersten Ausführungsbeispiels entsprechen, mit den gleichen Bezugszeichen wie in den Fig. 1 und 2 versehen sind.

Das zweite Ausführungsbeispiel unterscheidet sich von dem ersten Ausführungsbeispiel im wesentlichen durch die Ausbildung des Kopfstückes 3. In diesem Kopfstück ist beweglich ein Kolben 15 geführt, der bei seinem Absenken das Volumen der Pumpenkammer 16 verringert. Wie sich aus den Fig. 3 und 4 deutlich ergibt, ist dabei der obere und von Hand beaufschlagbare Teil des Kolbens 15 als etwa rechteckige Taste ausgebildet, wobei eine Rückstellfeder 8 in Form eines sich kegelförmig nach oben erstreckenden Federstreifens durch eine Öffnung in der Kolbenfläche hindurch in einen Hohlraum hinein erstreckt, der durch den etwa tastenförmigen, rechteckigen weiteren Kolbenteil gebildet ist.

Außer der im wesentlichen zylindrischen Pumpenkammer 16 weist das Kopfstück 3 einen kanalförmigen Teil 17 auf, der über einen Verbindungstunnel 18 mit dem zylindrischen Teil der Pumpenkammer 16 verbunden ist.

Wie insbesondere aus den Fig. 6 und 7 zu erkennen ist, wird dieser Verbindungstunnel 18 durch ein einstückiges Spritzgußteil 19 gebildet, das gleichzeitig die elastischen Klappen für die ersten und zweiten Rückschlagventile aufweist. Die elastische Klappe 20 deckt dabei wiederum eine Verbindungsöffnung 5 in der Trennwand 4 zwischen dem Behälter 1 und dem Kopfstück 3 ab. Die Klappe 21 schließt dagegen den kanalförmigen Teil 17 vom Durchlaßkanal des Applikators 9 ab. Wie aus den Fig. 6 und 7 zu erkennen ist, weist das einstückige Spritzgußteil 19 auch noch einen blattfederartigen Teil 22 einstückig mit dem Spritzgußteil auf, das die elastische Klappe 20 in Schließrichtung beaufschlagt. Wie aus Fig. 7 der Zeichnung zu erkennen ist, können die Scharniere zwischen der Klappe 20 und dem übrigen Teil des Spritzgußteils 19 durch entsprechende Ausnehmungen 23 an der Unterseite des Spritzgußteils gebildet werden.

Wie aus Fig. 3 zu erkennen ist, kann der Applikator 9 mit einer Verschlußklappe 24 versehen sein, um den Spender zu verschließen.

Selbstverständlich können Applikatoren unterschiedlicher Größe, Länge, Form und sonstiger Ausbildung wahlweise mit dem Spender benutzt werden, um bestimmte Anwendungen des in dem Behälter befindlichen Produktes zu erleichtern. Andererseits kann der Applikator aber auch mit dem Kopfstück einstückig ausgeführt werden, während sich für spezielle Anwendungen mit sehr langen Applikatoren, speziell im medizinischen Bereich für z. B. anale und vaginale Verabreichungen, sich bereits aus Fertigungsgründen eine zweiteilige Ausführung empfiehlt.

Die Wirkungsweise auch des in den Fig. 3 bis 8 dargestellten Ausführungsbeispiels ist prinzipiell die gleiche wie beim ersten Ausführungsbeispiel, wobei jedoch jetzt die Volumenverringerung der Pumpenkammer 16 durch Herabdrücken des Kolbens 15 erfolgt, während die Volumenvergrößerung durch ein anschließendes Aufwärtsbewegen des Kolbens 15 unter der Kraft der Rückstellfeder 8 erfolgt. Auch in diesem Fall arbeiten die Rückschlagventile in gleicher Weise, wie bei dem ersten Ausführungsbeispiel. Die bei der Bewegung des Kolbens 15 auftretende Verformung der Rückstellfeder 8 ist aus den Fig. 4 und 5 sofort zu erkennen.

In der in Fig. 8 schematisch dargestellten Ansicht sind Teile der Rückstellfeder 8 und die elastische Klappe 21 des zweiten Rückschlagventils gezeigt.

Die Rückstellfedern können aus Edelstahl oder als ein Spritzgußteil aus Makrolen gefertigt sein. Die Kunststoffteile des Behälters 1, des Kopfstückes 3, des Kolbens 15 sowie des Applikators können z. B. aus Polyäthylen oder Polypropylen gefertigt sein. Diese Werkstoffe stellen eine hohe Produktbeständigkeit bei dem Spender sicher, da damit fast alle für den Spender in Frage kommenden Produkte physikalisch und chemisch durch die Teile des Spenders nicht beeinflußt werden.

Anwendungsbeispiele für den Spender sind z. B. die Haar- und Hautkosmetik, die Mundhygiene, die Medizin und auch Lebensmittelbereiche, wobei pastöse Produkte unterschiedlichster Zusammensetzung in den Behälter 1 eingefüllt und von dem Spender ausgegeben werden können.

## Patentansprüche

1. Spender für pastöse Produkte mit einem das jeweilige Produkt enthaltenden Behälter (1), der an einem Ende mit einem dichtend an der Behälterinnenwand gleitenden Kolben (2) verschlossen und am anderen Ende von einer mindestens eine Öffnung (5) aufweisenden Trennwand (4) abgeschlossen und mit einem die Trennwand überdeckenden, einen Applikator (9) mit einem zur Öffnung (5) der Trennwand (4) seitlich versetzt verlaufenden Ausgabekanal aufweisenden Kopfstück (3) versehen ist, das zusammen mit der Trennwand (4) eine durch äußere Beaufschlagung volumenveränderliche Pumpenkammer bildet, die gegenüber dem Behälter durch ein nur in Richtung der Pumpenkammer zu öffnendes erstes Rückschlagventil (20) und gegenüber der Mündung des Applikators (9) durch ein nur in Richtung dieser Mündung zu öffnendes zweites Rückschlagventil (21) abgetrennt ist, dadurch gekennzeichnet, daß die Pumpenkammer (16) im wesentlichen zylindrisch ausgebildet ist, daß das Kopfstück (3) ein von außen betätigbares, relativ zur Trennwand (4) als Ganzes verschiebbares Pumpelement (3 bzw. 15) zur Volumenänderung der Pumpenkammer aufweist, an dem eine die Rückstellbewegung von der Trennwand weg bewirkende Rückstellfeder (8) angreift, und daß im Kopfstück (3) ein Spritzgußteil angeordnet ist, an dem das Verschließteil mindestens eines der beiden Rückschlagventile (20, 21) angebracht ist, wobei der Ventilsitz des ersten Rückschlagventils in der mit dem Behälter (1) einstückigen Trennwand (4) und der Ventilsitz des zweiten Rückschlagventils im kanalförmigen Teil des Kopfstücks (3) angeordnet ist.

2. Spender nach Anspruch 1, dadurch gekennzeichnet, daß das die Öffnung (5) in der Trennwand (4) abdeckende Verschließteil (20) des ersten Rückschlagventils an dem Spritzgußteil angebracht ist.

3. Spender nach Anspruch 2, dadurch gekennzeichnet, daß das Verschließteil (20) des ersten Rückschlagventils einstückig mit dem Spritzgußteil ist.

4. Spender nach mindestens einem der Ansprüche 1 bis 3, dadurch gekennzeichnet, daß sowohl das Verschließteil (20) des ersten Rückschlagventils als auch das Verschließteil (21) des zweiten Rückschlagventils an dem Spritzgußteil angebracht ist.

5. Spender nach Anspruch 4, dadurch gekennzeichnet, daß die Verschließteile (20, 21) beider Rückschlagventile einstückig mit dem Spritzgußteil sind.

6. Spender nach mindestens einem der Ansprüche 1 bis 5, dadurch gekennzeichnet, daß das Kopfstück (3) als eine in Längsrichtung des Behälters (1) relativ zur Trennwand (4) des Behälters verschiebbare, einen Teil der Mantelfläche des Behälters umfassende, das Pumpelement bildende Kappe ausgebildet ist.

7. Spender nach Anspruch 6, dadurch gekennzeichnet, daß das Spritzgußteil als elastische zylindrische Manschette ausgebildet ist, die parallel zur Innenmantelfläche der Kappe angeordnet und als Rückstellfeder (8) wirkend mit einem Ende an dem Kopfstück (3) und mit dem anderen Ende an der Trennwand (4) bzw. dem Behälter (1) anliegt.

8. Spender nach mindestens einem der Ansprüche 1 bis 7, dadurch gekennzeichnet, daß das erste Rückschlagventil (5, 6) einen an der Öffnung (5) der Trennwand (4) ausgebildeten Ventilsitz und ein mit diesem zusammenwirkendes Verschließteil aufweist, das als über elastische Bänder (7) gehaltener Ventildeckel (6) ausgebildet ist.

9. Spender nach den Ansprüchen 7 und 8, dadurch gekennzeichnet, daß der Ventildeckel (6) über elastische Bänder (7) an dem als elastische Manschette ausgebildeten Spritzgußteil gehalten ist.

10. Spender nach mindestens einem der Ansprüche 1 bis 5, dadurch gekennzeichnet, daß das Pumpelement als ein in die Pumpenkammer (16) absenkbarer, im Kopfstück (3) dichtend geführter Kolben (15) ausgebildet ist, und der Applikator als relativ zur Trennwand (4) des Behälters unbeweglicher Ausgabekanal ausgebildet ist.

11. Spender nach Anspruch 10, dadurch gekennzeichnet, daß das Spritzgußteil als einstückiges Teil (19) ausgebildet ist, das einen Verbindungstunnel (18) zwischen dem zylindrischen Teil der Pumpenkammer (16) und einen zum Applikator (9) führenden kanalförmigen Teil (17) bildet, und mit dem auch die ersten und zweiten Rückschlagventile (20, 21) einstückig verbunden sind, indem das zweite Rückschlagventil durch einen elastischen ersten Klappenteil (21) des Spritzgußteils (19) gebildet ist, während das erste Rückschlagventil durch ein eine Öffnung (5) in der Trennwand (4) zwischen Behälter (1) und Kopfstück (3) abdeckendes zweites Klappenteil (20) gebildet ist.

12. Spender nach Anspruch 11, dadurch gekennzeichnet, daß das zweite Klappenteil (20) durch eine einstückig an dem Spritzgußteil (19) angeformte Blattfeder (23) in Schließrichtung des ersten Rückschlagventils (5, 20) beaufschlagt ist.

13. Spender nach Anspruch 11 oder 12, dadurch gekennzeichnet, daß die Rückstellfeder (8) ein sich etwa kegelförmig durch eine Öffnung in der Kolbenfläche des Kolbens (15) hindurch in einen hohl ausgebildeten weiteren Kolbenteil hinein erstreckender Federstreifen ist, dessen freie Enden sich an der Trennwand (4) abstützen.

14. Spender nach mindestens einem der Ansprüche 1 bis 13, dadurch gekennzeichnet, daß der Applikator (9) lösbar und austauschbar auf das Kopfstück (3) aufsetzbar ist.

15. Spender nach mindestens einem der Ansprüche 1—3, 6—10, 13 oder 14, dadurch gekennzeichnet, daß der Applikator (9) eine das zweite Rückschagventil bildende elastische Klappe (11) in seinem Durchlaßkanal so trägt, daß ein erster Randbereich (12) zur Bildung des Scharniers zwischen Klappe (11) und Applikatorinnenwand elastisch, aber stabil, ausgebildet ist, während ein im wesentlichen gegenüberliegender zweiter Randbereich (13) dünn, den Durchlaßkanal jedoch noch vollständig verschließend ausgebildet ist, und daß ein den Applikator (9) aufnehmendes Hülsenteil (10) des Kopfstücks (3) einen nach oben gerichteten schneidenartigen Vorsprung (14) an seiner Innenmantelfläche hat, der beim vollständigen Einführen des Applikators in das Hülsenteil den zweiten Randbereich (13) durchtrennt.

## Claims

1. Dispenser for products in paste form with a container (1) containing the product concerned, which container is closed at one end with a piston (2) sliding in seal-tight manner on the inner wall of the container, and at the other end with a partition (4) having at least one opening (5), and which container is provided with a head piece (3) covering the partition and having an applicator (9) possessing a dispensing channel laterally staggered relative to the opening (5) of the partition (4), which head piece forms together with the partition (4) a pump chamber the volume of which varies through external admission, which pump chamber is separated from the container by a first non-return valve (20) to be opened only in the direction of the pump chamber, and from the orifice of the applicator (9) by a second non-return valve (21) to be opened only in the direction of said orifice, characterized in that the pump chamber (16) is substantially cylindrical, in that the head piece (3) has a pump element (3 or 15) actuatable from the outside, displaceable as a whole unit relative to the partition (4) to alter the volume of the pump chamber, on which pump element a return spring (8) engages and effects the return movement away from the partition, and in that, disposed in the head piece (3), there is provided an injection-moulded part on which the closure portion of at least one of the two non-return valves (20, 21) is mounted, the valve seat of the first non-return valve being disposed in the partition (4) integral with the container (1), and the valve seat of the second non-return valve being disposed in the channel-shaped part of the head piece (3).

2. Dispenser according to Claim 1, characterized in that the closure part (20) of the first non-return valve covering the opening (5) in the partition (4) is mounted on the injection-moulded part.

3. Dispenser according to Claim 2, characterized in that the closure part (20) of the first non-return valve is integral with the injection-moulded part.

4. Dispenser according to at least one of Claims 1 to 3, characterized in that both the closure part (20) of the first non-return valve and the closure part (21) of the second non-return valve are mounted on the injection-moulded part.

5. Dispenser according to Claim 4, characterized in that the closure parts (20, 21) of the two non-return valves are integral with the injection-moulded part.

6. Dispenser according to at least one of Claims 1 to 5, characterized in that the head piece (3) is formed as a hood movable in the longitudinal direction of the container (1) relative to the partition (4) of the container, encompassing part of the overall surface of the container, and forming the pump element.

7. Dispenser according to Claim 6, characterized in that the injection-moulded part is formed as an elastic cylindrical sleeve which is disposed parallel to the internal surface of the hood and, acting as a return spring (8) applies at one end on the head piece (3) and at the other end on the partition (4) or the container (1).

8. Dispenser according to at least one of Claims 1 to 7, characterized in that the first non-return valve (5, 6) has a valve seat formed on the opening (5) of the partition (4) and a closure part cooperating with this, which closure part is formed as a valve cover (6) held on elastic bands (7).

9. Dispenser according to Claims 7 and 8, characterized in that the valve cover (6) is held on elastic bands (7) on the injection-moulded part formed as an elastic sleeve.

10. Dispenser according to at least one of Claims 1 to 5, characterized in that the pump element is constructed as a piston (15) able to be lowered into the pump chamber (16) and seal-tightly guided in the head piece (15), and in that the applicator is formed as a dispensing channel stationary relative to the partition (4) of the container.

11. Dispenser according to Claim 10, characterized in that the injection-moulded part is designed as a one-piece part (19) which forms a connection tunnel (18) between the cylindrical part of the pump chamber (16) and a channel-shaped part (17) leading to the applicator (9), and with which the first and second non-return valves (20, 21) are also connected as one piece, while the second non-return valve is formed by an elastic first valve part (21) of the injection-moulded part (19), and while the first non-return valve is formed by a second valve part (20) covering an opening (5) in the partition between container (1) and head piece (3).

12. Dispenser according to Claim 11, characterized in that the second valve part (20) is impinged by a leaf spring (23) integral with the injection-moulded part (19) in the closure direction of the first non-return valve (5, 20).

13. Dispenser according to Claim 11 or 12, characterized in that the return spring (8) is a spring strip extending substantially conically through an opening in the piston surface of the piston (15) into a further hollow piston part, the free ends of said strip being supported on the partition (4).

14. Dispenser according to at least one of Claims 1 to 13, characterized in that the applicator (9) can be placed in removable and exchangeable manner on the head piece (3).

15. Dispenser according to at least one of Claims 1—3, 6—10, 13 or 14, characterized in that the applicator (9) supports in its discharge channel an elastic flap (11) forming the second non-return valve in such a manner that a first marginal area (12) is constructed elastic but stable to form the hinge between flap (11) and inner wall of the applicator, while an essentially opposite second marginal area (13) is formed thinly but still to completely close the discharge channel, and in that a sleeve part (10) of the head piece (3) accommodating the applicator (9) has on its inside surface an upwardly-directed blade-type projection (14) which, on the full introduction of the applicator into the sleeve part cuts through second marginal area (13).

**Revendications**

1. Distributeur pour produits pâteux, comprenant un réservoir (1) qui renferme le produit considéré et est obturé à une extrémité par un piston (2) coulissant hermétiquement contre la face interne de la paroi du réservoir, l'autre extrémité de ce dernier étant fermée par une cloison séparatrice (4) percée d'au moins un orifice (5) et étant pour-vue d'un capuchon (3) qui, recouvrant la cloison séparatrice et muni d'un applicateur (9) doté d'un canal dispensateur décalé latéralement de l'orifice (5) de la cloison séparatrice (4), forme conjointement à ladite cloison séparatrice (4) une chambre de pompage qu'une action exercée de l'extérieur peut faire varier de volume et qui est séparée, par rapport au réservoir, par un premier clapet anti-retour (20) devant être ouvert seulement en direction de la chambre de pompage et, par rapport à l'embouchure de l'applicateur (9), par un second clapet anti-retour (21) devant être ouvert seulement en direction de ladite embouchure, caractérisé par le fait que la chambre de pompage (16) est de réalisation sensiblement cylindrique; par le fait que le capuchon (3) présente, en vue de faire varier le volume de cette chambre de pompage, un élément de pompage (3 ou 15) actionnable de l'extérieur, mobile d'un seul bloc par rapport à la cloison séparatrice (4) et avec lequel est en prise un ressort de rappel (8) provoquant le mouvement de rappel d'avec ladite cloison séparatrice; et par le fait que ledit capuchon (3) loge une pièce venue de moulage par injection, sur laquelle est installée la partie d'obturation d'au moins l'un des deux clapets anti-retour (20, 21), le siège du premier clapet anti-retour étant situé dans ladite cloison séparatrice (4) formant un seul tenant avec le réservoir (1), et le siège du second clapet anti-retour se trouvant dans la partie en forme de canal dudit capuchon (3).

2. Distributeur selon la revendication 1, caractérisé par le fait que la partie d'obturation (20) du premier clapet anti-retour, qui recouvre l'orifice (5) dans la cloison séparatrice (4), se trouve sur la pièce venue de moulage par injection.

3. Distributeur selon la revendication 2, caractérisé par le fait que la partie d'obturation (20) du premier clapet anti-retour est d'un seul tenant avec la pièce moulée par injection.

4. Distributeur selon au moins l'une des revendications 1 à 3, caractérisé par le fait qu'aussi bien la partie d'obturation (20) du premier clapet anti-retour que la partie d'obturation (21) du second clapet anti-retour se trouvent sur la pièce moulée par injection.

5. Distributeur selon la revendication 4, caractérisé par le fait que les parties d'obturation (20, 21) des deux clapets anti-retour sont d'un seul tenant avec la pièce moulée par injection.

6. Distributeur selon au moins l'une des revendications 1 à 5, caractérisé par le fait que le capuchon (3) est réalisé sous la forme d'un chapeau qui, formant l'élément de pompage, est mobile dans le sens longitudinal du réservoir (1) par rapport à la cloison séparatrice (4) de ce réservoir et entoure une partie de la surface de l'enveloppe dudit réservoir.

7. Distributeur selon la revendication 6, caractérisé par le fait que la pièce moulée par injection est réalisée sous la forme d'une garniture cylindrique élastique qui est située parallèlement à la face circonférentielle interne du chapeau et qui, agissant comme un ressort de rappel (8), est appliquée par une extrémité contre le capuchon (3) et est en appui par son autre extrémité contre la cloison séparatrice (4) ou le réservoir (1).

8. Distributeur selon au moins l'une des revendications 1 à 7, caractérisé par le fait que le premier clapet anti-retour (5, 6) comprend un siège de valve façonné sur l'orifice (5) de la cloison séparatrice (4), ainsi qu'une partie d'obturation qui coopère avec ledit siège et est réalisée sous la forme d'un couvercle obturateur (6) retenu par des bandes élastiques (7).

9. Distributeur selon les revendications 7 et 8, caractérisé par le fait que le couvercle obturateur (6) est maintenu en place par des bandes élastiques (7) sur la pièce moulée par injection réalisée en tant que garniture élastique.

10. Distributeur selon au moins l'une des revendications 1 à 5, caractérisé par le fait que l'élément de pompage est réalisé sous la forme d'un piston (15) pouvant être abaissé dans la chambre de pompage (16) et guidé hermétiquement dans le capuchon (3), et l'applicateur se présente sous la forme d'un canal dispensateur immobile par rapport à la cloison séparatrice (4) du réservoir.

11. Distributeur selon la revendication 10, caractérisé par le fait que la pièce moulée par injection est réalisée sous la forme d'une pièce monobloc (19) qui forme un tunnel de jonction (18) entre la partie cylindrique de la chambre de pompage (16) et une partie (17) en forme de canal qui gagne l'applicateur (9), et avec laquelle les premier et second clapets anti-retour (20, 21) sont également reliés d'un seul tenant, le second clapet anti-retour étant formé par un premier volet élastique (21) de la pièce (19) moulée par injection, cependant que le premier clapet anti-retour est formé par un second volet (20) qui recouvre un orifice (5) ménagé dans la cloison séparatrice (4) entre le réservoir (1) et le capuchon (3).

12. Distributeur selon la revendication 11, caractérisé par le fait que le second volet (20) est sollicité, par une lame de ressort (23) formant un seul bloc avec la pièce (19) moulée par injection, dans le sens de la fermeture du premier clapet anti-retour (5, 20).

13. Distributeur selon la revendication 11 ou 12, caractérisé par le fait que le ressort de rappel (8) consiste en une bande élastique qui s'engage dans une autre partie du piston de réalisation creuse en traversant de part en part, à peu près coniquement, un orifice dans la surface du piston (15), les extrémités libres de cette bande prenant appui contre la cloison séparatrice (4).

14. Distributeur selon au moins l'une des revendications 1 à 13, caractérisé par le fait que l'applicateur (9) peut être enfilé amovible et remplaçable sur le capuchon (3).

15. Distributeur selon au moins l'une des revendications 1—3, 6—10, 13 ou 14, caractérisé par le fait que l'applicateur (9) supporte dans son canal de passage un volet élastique (11) formant le second clapet anti-retour, d'une manière telle qu'une première zone marginale (12) soit réalisée élastique, mais stable en vue de former la charnière entre le volet (11) et la face interne de la paroi de l'applicateur, cependant qu'une seconde zone marginale (13) située sensiblement en regard est réalisée mince en obturant toutefois intégralement ledit canal de passsage; et par le fait qu'une partie tubulaire (10) du capuchon (3), recevant l'applicateur (9), possède sur la face interne de son enveloppe une saillie (14) en forme de tranchant dirigé vers le haut, qui sectionne la seconde zone marginale (13) lorsque ledit applicateur est introduit à fond dans ladite partie tubulaire.

fig.1

fig.2

fig.3

fig.4

fig.5

fig.6

fig.7

fig.8